# EUROPÄISCHE PATENTSCHRIFT

(11) **EP 4 088 876 B1**
(45) Veröffentlichungstag und Bekanntmachung des Hinweises auf die Patenterteilung: **03.07.2024**
(21) Anmeldenummer: 21173489.2
(22) Anmeldetag: 12.05.2021
(51) Int. Cl.: B25F 5/02, B25F 5/00

(54) **HANDGETRAGENES ELEKTROWERKZEUG**
HAND-HELD ELECTRIC POWER TOOL
OUTIL ÉLECTRIQUE PORTABLE

(43) Veröffentlichungstag der Anmeldung: 16.11.2022
(73) Patentinhaber: Andreas Stihl AG & Co. KG, 71336 Waiblingen (DE)
(72) Erfinder: KOLB, Joachim, 71638 Ludwigsburg (DE)
(74) Vertreter: Patentanwälte Ruff, Wilhelm, Beier, Dauster & Partner mbB

(56) Entgegenhaltungen:
- EP-B1- 1 620 233
- US-A1- 2008 054 743

## Beschreibung

Die US 2008/0054743 A1 offenbart ein handgetragenes Elektrowerkzeug, aufweisend: eine elektrische Anschlussbuchse, und einen Griff zum Handhaben des Elektrowerkzeugs, wobei der Griff aus mehreren Komponenten besteht, wobei mindestens eine Komponente des Griffs als Lager der elektrischen Anschlussbuchse dient, und wobei die Komponenten des Griffs eine Griffhülle aufweisen, wobei ein Teil der Griffhülle als Lager der elektrischen Anschlussbuchse dient.

Der Erfindung liegt die Aufgabe zugrunde, ein handgetragenes Elektrogerät mit einer elektrischen Anschlussbuchse zur Verfügung zu stellen, das möglichst kostengünstig herstellbar ist und eine hohe Zuverlässigkeit aufweist.

Das handgetragene Elektrowerkzeug weist eine elektrische Anschlussbuchse auf. Die elektrische Anschlussbuchse kann dazu vorgesehen sein, einen korrespondierenden Stecker aufzunehmen, um das handgetragene Elektrogerät beispielsweise mit einem elektrischen Energiespeicher bzw. Akkumulator oder einem Stromnetz zu verbinden.

Das handgetragene Elektrowerkzeug weist weiter einen Griff zum Handhaben des Elektrowerkzeugs auf, wobei der Griff aus mehreren Komponenten besteht.

Erfindungsgemäß dient mindestens eine Komponente des Griffs gleichzeitig als Lager der elektrischen Anschlussbuchse, d.h. weist einen Doppelnutzen auf.

In einer Ausführungsform weisen die Komponenten des Griffs zwei Griffschalen auf, wobei die Griffschalen als Lager der elektrischen Anschlussbuchse dienen.

In einer Ausführungsform begrenzen die Griffschalen jeweils einen Halbkreiszylinder, so dass diese in gefügtem Zustand gemeinsam einen Kreiszylinder begrenzen, in den die elektrische Anschlussbuchse einsetzbar ist.

In einer Ausführungsform bestehen die Griffschalen aus einem thermoplastischen Elastomer, so dass eine gute Schwingungsdämpfung der eingesetzten elektrischen Anschlussbuchse gewährleistet ist.

Erfindungsgemäß weisen die Komponenten des Griffs eine Griffhülle auf, wobei ein Teil der Griffhülle, beispielsweise ein Endabschnitt der Griffhülle, als Lager der elektrischen Anschlussbuchse dient.

Erfindungsgemäß ist die Griffhülle als Griffumspritzung ausgebildet.

In einer Ausführungsform besteht die Griffhülle aus einem thermoplastischen Elastomer.

In einer Ausführungsform ermöglicht die mindestens eine Komponente eine Relativbewegung der elektrischen Anschlussbuchse zu einem Gehäuse des Elektrowerkzeugs, so dass eine Schwingungsentkopplung der elektrischen Anschlussbuchse relativ zum Gehäuse ermöglicht wird.

In einer Ausführungsform weist die mindestens eine Komponente schwingungsdämpfende Eigenschaften auf.

In einer Ausführungsform weist die elektrische Anschlussbuchse eine Anzahl von elektrischen Anschlusskontakten auf, insbesondere genau vier elektrische Anschlusskontakte.

In einer Ausführungsform weist die elektrische Anschlussbuchse eine kreiszylindrische Form auf.

In einer Ausführungsform ist das Elektrowerkzeug eine Motorsäge, oder eine Heckenschere, oder ein Laubbläser, oder ein Laubsauger, oder ein Rasenmäher, oder ein Freischneider.

Die Erfindung wird nachfolgend unter Bezugnahme auf die Zeichnung detailliert beschrieben. Hierbei zeigt:
- Fig. 1: eine perspektivische Ansicht eines erfindungsgemäßen handgetragenen Elektrowerkzeugs in Form eines Laubbläsers, und
- Fig. 2: hoch schematisch eine exemplarische Ansicht von Komponenten eines Griffs des handgetragenen Elektrowerkzeugs und einer elektrische Anschlussbuchse des handgetragenen Elektrowerkzeugs.

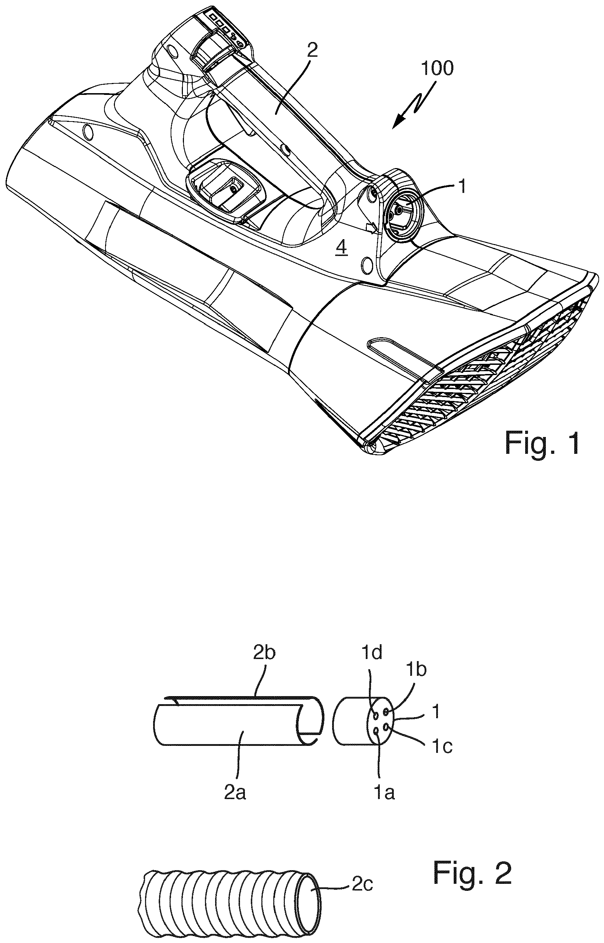

Fig. 1 zeigt eine perspektivische Ansicht eines erfindungsgemäßen handgetragenen Elektrowerkzeugs 100 in Form eines Laubbläsers.

Fig. 2 zeigt hoch schematisch eine exemplarische Ansicht von Komponenten 2a, 2b und 2c eines Griffs 2 des handgetragenen Elektrowerkzeugs 100 und eine exemplarische Ansicht einer elektrische Anschlussbuchse 1 des handgetragenen Elektrowerkzeugs. Die in Fig. 2 gezeigten Komponenten können insbesondere aufgrund ihrer lediglich exemplarischen Darstellung von ihrer Darstellung in Fig. 1 abweichen.

Bezug nehmen auf Fig. 1 und Fig. 2, weist das handgetragene Elektrowerkzeug 100 eine herkömmliche elektrische Anschlussbuchse 1 mit vier elektrischen Anschlusskontakten 1a, 1b, 1c, 1d auf. Die Anschlussbuchse 1 mit ihren Anschlusskontakten 1a, 1b, 1c, 1d korrespondiert beispielsweise mit einem Steckverbinder eines Rücken-Akkus, der zur Versorgung des handgetragenen Elektrowerkzeugs 100 bzw. zur Versorgung der Elektronik und eines Elektromotors des handgetragenen Elektrowerkzeugs 100 dient. Die elektrische Anschlussbuchse 1 weist eine kreiszylindrische Form auf.

Das handgetragene Elektrowerkzeug 100 weist weiter einen Griff 2 zum Handhaben des Elektrowerkzeugs 100 auf, wobei der Griff aus mehreren Komponenten 2a, 2b, 2c besteht.

Die Komponenten des Griffs weisen zwei Griffschalen 2a, 2b auf, wobei die Griffschalen 2a, 2b jeweils einen Halbkreiszylinder begrenzen. Die Griffschalen 2a, 2b bestehen jeweils aus einem thermoplastischen Elastomer.

Die Komponenten des Griffs weisen weiter eine Griffhülle 2c auf, wobei die Griffhülle 2c als Griffumspritzung ausgebildet ist. Die Griffhülle 2c besteht aus einem thermoplastischen Elastomer. Die Griffhülle 2c kann die beiden Griffschalen 2a, 2b in einem betriebsbereiten Zustand umschließen.

Erfindungsgemäß dienen die Griffschalen 2a, 2b und/oder die Griffhülle 2c als Lager oder Lagerbestandteil der elektrischen Anschlussbuchse 1.

Beispielsweise ist es möglich, dass die beiden Griffschalen 2a, 2b das Lager der elektrischen Anschlussbuchse 1 bilden, indem die Anschlussbuchse 1 in den durch die beiden Griffschalen 2a, 2b gebildeten kreiszylindrischen Hohlraum eingeschoben wird.

Die Komponenten 2a, 2b, 2c weisen jeweils schwingungsdämpfende Eigenschaften auf und ermöglichen eine Relativbewegung der elektrischen Anschlussbuchse 1 zu einem Gehäuse 4 des Elektrowerkzeugs 100.

Erfindungsgemäß wird die Buchse derart gelagert, dass Schwingungen und Bewegungen gedämpft/abgeschwächt werden.

Hierzu sind die Griffschalen 2a, 2b (aus TPE oder einem anderen weichen Gummi) derart ausgeführt, dass die elektrische Anschlussbuchse 1 in den Griffschalen 2a, 2b gelagert ist. Mit anderen Worten werden die Griffschalen 2a, 2b als Buchsenlagerung inkl. Dämpfer verwendet und weisen daher einen Doppelnutzen auf.

Alternativ oder zusätzlich kann die Griffhülle 2c bzw. die Umspritzung der Griffstelle (meist aus TPE oder einem anderen weichen Gummi) derart nach innen in eine Innenseite des Griffgehäuses geführt werden, dass die elektrische Anschlussbuchse 1 in der Griffhülle 2c gelagert ist. Mit anderen Worten wird die Griffhülle 2c bzw. die Umspritzung der Griffstelle, die beispielsweise aus den Griffschalen 2a und 2b gebildet wird, als Buchsenlagerung inkl. Dämpfer verwendet und weist daher einen Doppelnutzen auf.

## Patentansprüche

1. Handgetragenes Elektrowerkzeug (100), aufweisend:
- eine elektrische Anschlussbuchse (1), und
- einen Griff (2) zum Handhaben des Elektrowerkzeugs (100), wobei der Griff (2) aus mehreren Komponenten (2a, 2b, 2c) besteht,
- wobei mindestens eine Komponente (2a, 2b, 2c) des Griffs (2) als Lager der elektrischen Anschlussbuchse (1) dient, und
- wobei die Komponenten des Griffs eine Griffhülle (2c) aufweisen, wobei ein Teil der Griffhülle (2c) als Lager der elektrischen Anschlussbuchse dient,
**dadurch gekennzeichnet, dass**
- die Griffhülle (2c) als Griffumspritzung ausgebildet ist.

2. Handgetragenes Elektrowerkzeug (100) nach Anspruch 1, **dadurch gekennzeichnet, dass**
- die Komponenten des Griffs zwei Griffschalen (2a, 2b) aufweisen, wobei die Griffschalen (2a, 2b) als Lager der elektrischen Anschlussbuchse (1) dienen.

3. Handgetragenes Elektrowerkzeug (100) nach Anspruch 2, **dadurch gekennzeichnet, dass**
- die Griffschalen (2a, 2b) jeweils einen Halbkreiszylinder begrenzen.

4. Handgetragenes Elektrowerkzeug (100) nach Anspruch 2 oder 3, **dadurch gekennzeichnet, dass**
- die Griffschalen (2a, 2b) aus einem thermoplastischen Elastomer bestehen.

5. Handgetragenes Elektrowerkzeug (100) nach einem der vorhergehenden Ansprüche, **dadurch gekennzeichnet, dass**
- die Griffhülle (2c) aus einem thermoplastischen Elastomer besteht.

6. Handgetragenes Elektrowerkzeug (100) nach einem der vorhergehenden Ansprüche, **dadurch gekennzeichnet, dass**
- die mindestens eine Komponente (2a, 2b, 2c) eine Relativbewegung der elektrischen Anschlussbuchse (1) zu einem Gehäuse (4) des Elektrowerkzeugs (100) ermöglicht.

7. Handgetragenes Elektrowerkzeug (100) nach einem der vorhergehenden Ansprüche, **dadurch gekennzeichnet, dass**
- die mindestens eine Komponente (2a, 2b, 2c) schwingungsdämpfende Eigenschaften aufweist.

8. Handgetragenes Elektrowerkzeug (100) nach einem der vorhergehenden Ansprüche, **dadurch gekennzeichnet, dass**
- die elektrische Anschlussbuchse (1) eine Anzahl von elektrischen Anschlusskontakten (1a, 1b, 1c, 1d) aufweist, insbesondere genau vier elektrische Anschlusskontakte (1a, 1b, 1c, 1d) aufweist.

9. Handgetragenes Elektrowerkzeug (100) nach einem der vorhergehenden Ansprüche, **dadurch gekennzeichnet, dass**
- die elektrische Anschlussbuchse (1) eine kreiszylindrische Form aufweist.

10. Handgetragenes Elektrowerkzeug (100) nach einem der vorhergehenden Ansprüche, **dadurch gekennzeichnet, dass**
- das Elektrowerkzeug (100) eine Motorsäge, oder eine Heckenschere, oder ein Laubbläser, oder ein Laubsauger, oder ein Rasenmäher, oder ein Freischneider ist.

## Claims

1. Handheld power tool (100), having:
- an electric connecting socket (1), and
- a handle (2) for handling the power tool (100), wherein the handle (2) consists of a plurality of components (2a, 2b, 2c),
- wherein at least one component (2a, 2b, 2c) of the handle (2) is used as a mounting of the electric connecting socket (1), and
- wherein the components of the handle have a handle cover (2c), wherein part of the handle cover (2c) is used as a mounting of the electric connecting socket,
**characterized in that**
- the handle cover (2c) is formed as a handle overmoulding.

2. Handheld power tool (100) according to Claim 1, **characterized in that**
- the components of the handle have two handle shells (2a, 2b), wherein the handle shells (2a, 2b) are used as a mounting of the electric connecting socket (1).

3. Handheld power tool (100) according to Claim 2, **characterized in that**
- the handle shells (2a, 2b) each delimit a semicircular cylinder.

4. Handheld power tool (100) according to Claim 2 or 3, **characterized in that**
- the handle shells (2a, 2b) consist of a thermoplastic elastomer.

5. Handheld power tool (100) according to one of the preceding claims, **characterized in that**
- the handle cover (2c) consists of a thermoplastic elastomer.

6. Handheld power tool (100) according to one of the preceding claims, **characterized in that**
- the at least one component (2a, 2b, 2c) permits a relative movement of the electric connecting socket (1) relative to a housing (4) of the power tool (100).

7. Handheld power tool (100) according to one of the preceding claims, **characterized in that**
- the at least one component (2a, 2b, 2c) has vibration-damping properties.

8. Handheld power tool (100) according to one of the preceding claims, **characterized in that**
- the electric connecting socket (1) has a number of electric connecting contacts (1a, 1b, 1c, 1d), in particular exactly four electric connecting contacts (1a, 1b, 1c, 1d).

9. Handheld power tool (100) according to one of the preceding claims, **characterized in that**
- the electric connecting socket (1) has a circular-cylindrical shape.

10. Handheld power tool (100) according to one of the preceding claims, **characterized in that**
- the power tool (100) is a power saw or a hedge trimmer or a leaf blower or a leaf vacuum or a lawn mower or a brush-cutter.

## Revendications

1. Outil électrique à main (100) comportant :
- une douille de raccordement électrique (1), et
- une poignée (2) de manipulation de l'outil électrique (100), la poignée (2) comprenant plusieurs composants (2a, 2b, 2c),
- au moins un composant (2a, 2b, 2c) de la poignée (2) servant de support de la douille de raccordement électrique (1), et
- les composants de la poignée comportant une enveloppe de poignée (2c), une partie de l'enveloppe de poignée (2c) servant de support de la douille de raccordement électrique,
**caractérisé en ce que**
- l'enveloppe de poignée (2c) est conçue comme un enrobage de poignée.

2. Outil électrique à main (100) selon la revendication 1, **caractérisé en ce que** les composants de la poignée présentent deux coques de poignée (2a, 2b), les coques de poignée (2a, 2b) servant de support de la douille de raccordement électrique (1).

3. Outil électrique à main (100) selon la revendication 2, **caractérisé en ce que** les coques de poignée (2a, 2b) délimitent chacune un demi-cylindre à base circulaire.

4. Outil électrique à main (100) selon la revendication 2 ou 3, **caractérisé en ce que**
- les coques de poignée (2a, 2b) étant en un élastomère thermoplastique.

5. Outil électrique à main (100) selon l'une des revendications précédentes, **caractérisé en ce que**
- l'enveloppe de poignée (2c) est en un élastomère thermoplastique.

6. Outil électrique à main (100) selon l'une des revendications précédentes, **caractérisé en ce que**
- l'au moins un composant (2a, 2b, 2c) permet un mouvement relatif de la douille de raccordement électrique (1) par rapport à un boîtier (4) de l'outil électrique (100).

7. Outil électrique à main (100) selon l'une des revendications précédentes, **caractérisé en ce que**
- l'au moins un composant (2a, 2b, 2c) présente des propriétés d'amortissement de vibrations.

8. Outil électrique à main (100) selon l'une des revendications précédentes, **caractérisé en ce que**
- la douille de raccordement électrique (1) comporte un certain nombre de contacts de raccordement électrique (1a, 1b, 1c, 1d), en particulier exactement quatre contacts de raccordement électrique (1a, 1b, 1c, 1d) .

9. Outil électrique à main (100) selon l'une des revendications précédentes, **caractérisé en ce que**
- la douille de raccordement électrique (1) a une forme cylindrique à base circulaire.

10. Outil électrique à main (100) selon l'une des revendications précédentes, **caractérisé en ce que**
- l'outil électrique (100) est une tronçonneuse, ou un taille-haie, ou un souffleur de feuilles, ou un aspirateur de feuilles, ou une tondeuse à gazon, ou une débroussailleuse.
